# EUROPÄISCHE PATENTSCHRIFT

(11) **EP 2 223 856 B1**
(45) Veröffentlichungstag und Bekanntmachung des Hinweises auf die Patenterteilung: **18.04.2018**
(21) Anmeldenummer: 10001141.0
(22) Anmeldetag: 04.02.2010
(51) Int. Cl.: B64D 27/10, B64D 27/14, B64D 33/02, B64D 33/04, F02C 3/14, F02K 3/068, F02K 3/072

(54) **Turboproantrieb mit Druckpropeller**
Turboprop engine with pusher propeller
Turbopropulseur doté d'une hélice propulsive

(30) Priorität: 25.02.2009 DE 102009010524
(43) Veröffentlichungstag der Anmeldung: 01.09.2010
(73) Patentinhaber: Rolls-Royce Deutschland Ltd & Co KG, 15827 Blankenfelde-Mahlow (DE)
(72) Erfinder: Negulescu, Dimitrie, Dr., 14163 Berlin (DE)
(74) Vertreter: Hoefer & Partner Patentanwälte mbB

(56) Entgegenhaltungen:
- US-A- 2 160 281
- US-A- 2 454 738
- US-A- 2 504 414
- US-A- 3 131 536

## Beschreibung

Die Erfindung bezieht sich auf einen Turbopropantrieb mit zumindest einem von einer Fluggasturbine angetriebenen Druckpropeller.

Aus dem Stand der Technik ist es bekannt, Fluggasturbinen für einen Turbopropantrieb einzusetzen und dabei Druckpropeller zu verwenden. In Flugrichtung gesehen ist somit die Fluggasturbine vor dem Druckpropeller oder den mehreren Druckpropellern angeordnet. Derartige Antriebe sind insbesondere bei Heckinstallationen an Flugzeugen bekannt.

Bei den bekannten Turbopropantrieben ist die Fluggasturbine in üblicher Durchströmungsrichtung angeordnet. Dies bedeutet, dass sie von vorne (bezogen auf die Flugzeuglängsachse) angeströmt wird, so dass in üblicher Anordnung die anströmende Luft zunächst durch einen Verdichter geleitet wird, bevor sie in die Brennkammer gelangt und die Abgase einer Turbine zugeleitet werden. Somit befindet sich am vorderen Teil der Gondel ein direkter Pitot-Einlauf zum Verdichter. Stromab ist somit die Turbine angeordnet, welche Leistung über eine Turbinenwelle an den oder die Druckpropeller abgibt. Die Leistungsabgabe erfolgt dabei entweder zu einem Propelleruntersetzungsgetriebe oder direkt zum Propeller. Stromab ist bei dem bekannten Aufbau dann die Düse angeordnet, durch welche die Abgase abströmen.

Der aus dem Stand der Technik bekannte Aufbau weist folgende Nachteile auf:
Durch die Platzierung des Propellerantriebs in direkter Nachbarschaft zu dem Austritt der heißen Abgase laufen die Propeller durch die heißen Abgase der Turbomaschine. Die Lebensdauer der Propeller ist dadurch stark reduziert. Weiterhin erhöhen sich die Lärmemissionen.

Ein weiterer, entscheidender Nachteil liegt darin, dass das Propellergetriebe von den heißen Abgasen umströmt wird, so dass erhebliche Anstrengungen unternommen werden müssen, um sowohl die Aufhängungsstruktur und den Einstellmechanismus als auch das Getriebe selbst zu kühlen. Dies erfolgt üblicherweise mit großen Öl-Luft-Kühlern, die kostenintensiv sind und zusätzliches Gewicht bringen.

Als weiterer Nachteil ergibt sich bei diesen Ausgestaltungen eine störanfällige Installation mit kurzer Laufzeit zwischen den Grundüberholungen. Die gesamte Zuverlässigkeit des Antriebssystems ist mangelhaft. Weiterhin ergibt sich ein erhöhtes Gefahrenpotential durch die Feuergefahr bei Ölleckagen aus dem Getriebe und dem Propellerblatt-Verstellmechanismus.

Zum Stand der Technik wird auf die US 2008/258005 A verwiesen.

Die US 2 504 414 A beschreibt eine Fluggasturbine mit zwei Druckpropellern. Der Lufteinlass, welcher Luft zu einem Niederdruckverdichter und einem Hochdruckverdichter leitet, ist in Flugrichtung gesehen am hinteren Bereich des Turboprop-Antriebs benachbart zu den Druckpropellern angeordnet. Die Luft wird durch die Kompressoren gegen die Flugrichtung zu dem in Strömungsrichtung vorderen Bereich der Fluggasturbine geführt und einer Brennkammer zugeleitet. Die aus der Brennkammer austretenden Gase werden zunächst durch eine Hochdruckturbine geführt und anschließend umgelenkt und entlang der Fluggasturbine nach hinten, bezogen auf die Flugrichtung, geleitet, bevor sie durch eine Niederdruckturbine geleitet und am hinteren Ende der Fluggasturbine zu den Propellern ausgelassen wird.

Der Erfindung liegt die Aufgabe zugrunde, einen Turbopropantrieb der eingangs genannten Art zu schaffen, welcher bei einfachem Aufbau und einfacher, kostengünstiger Herstellbarkeit die Nachteile des Standes der Technik vermeidet und ein hohes Maß an Zuverlässigkeit aufweist.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit ein Turbopropantrieb geschaffen, bei welchem die Fluggasturbine in umgekehrter Anordnung, bezogen auf die Strömungsrichtung, eingebaut ist. Die Fluggasturbine ist somit so installiert, dass die heißen Abgase, bezogen auf die Flugrichtung, vorne austreten, während der kühlere Verdichterbereich angrenzend an die Druckpropeller angeordnet ist.

In günstiger Ausgestaltung der Erfindung ist vorgesehen, dass die Turbinenwelle in Richtung zum Druckpropeller verlängert ausgebildet und mit einem den Druckpropeller antreibenden Getriebe verbunden ist. Das Getriebe befindet sich somit nicht im Bereich der ausströmenden heißen Abgase, so dass auf aufwendige Kühleinrichtungen entweder gänzlich verzichtet werden kann oder diese geringer dimensioniert werden können.

Durch die geringere thermische Belastung sowohl der Propeller als auch des Getriebes und der Verstellmechanismen, ergibt sich ein gesteigertes Maß an Zuverlässigkeit und Laufzeit zwischen den Grundüberholungen.

Durch die erfindungsgemäß vorgesehene Anordnung ergeben sich weiterhin reduzierte Schallemissionen, da das aus der Düse austretende Abgas nicht direkt in den Propeller eingeleitet wird und nicht durch eine rückseitige Düse abströmt.

Ein weiterer Vorteil besteht in der Möglichkeit, die Aufhängung kleiner und damit leichter zu dimensionieren.

Erfindungsgemäß ist es besonders günstig, wenn zumindest ein die anströmende Luft zum Verdichter umlenkender Einlassströmungskanal vorgesehen ist, welcher in den Einströmbereich des Verdichters mündet. Die zugeführte Luft wird somit um 180° umgeleitet und dem Verdichter der Fluggasturbine, bezogen auf die Flugrichtung, von der Rückseite zugeführt.

Dabei ist es auch besonders vorteilhaft, wenn ein den Abgasstrom in Richtung des Druckpropellers umleitender Abgasströmungskanal vorgesehen ist. Auf diese Weise werden die Abgase ebenfalls um 180° umgeleitet und in gezielter Weise nach hinten in den Propellerbereich geführt. Bedingt durch die Baulänge des Turbopropantriebs kühlt sich dabei der Heißgasstrom erheblich ab, so dass er beispielsweise den Propellerbereich nur mit einer Temperatur von 100°C erreicht, während das Heißgas beim Austritt aus der Turbine und beim Eintritt in den Abgasströmungskanal eine weitaus höhere Temperatur aufweist. Der Abgasströmungskanal kann in günstiger Weise am vorderen Bereich des Turbopropantriebs münden, so dass eine ungehinderte Strömungsführung sowohl des Abgases als auch der dem Verdichter zugeführten Frischluft gewährleistet ist. Dabei ist es besonders günstig, wenn der Einlassströmungskanal und der Abgasströmungskanal in Umfangsrichtung des Turbopropantriebs versetzt angeordnet sind.

Erfindungsgemäß können zwei Druckpropeller vorgesehen sein, die gegenläufig laufen.

Die Erfindung bezieht sich nicht nur auf Heckinstallationen von gegenläufigen Propellern, sondern auch auf die Heckinstallation mit nur einem Propeller oder auf eine Propfaninstallation.

Im Folgenden wird die Erfindung anhand eines Ausführungsbeispiels in Verbindung mit der Zeichnung beschrieben. Dabei zeigt:
- Fig. 1: eine Teil-Seitenansicht, teils im Schnitt, einer Heckinstallation eines erfindungsgemäßen Turbopropantriebs an einem Flugzeug,
- Fig. 2: eine perspektivische, vereinfachte Teilansicht,
- Fig. 3: eine Frontansicht, analog Fig. 1,
- Fig. 4: eine perspektivische, schematische Darstellung eines Ausführungsbeispiels eines Umkehrabgasgehäuses, und
- Fig. 5: eine perspektivische, vereinfachte Darstellung eines Ausführungsbeispiels eines erfindungsgemäßen Einlasskanals.

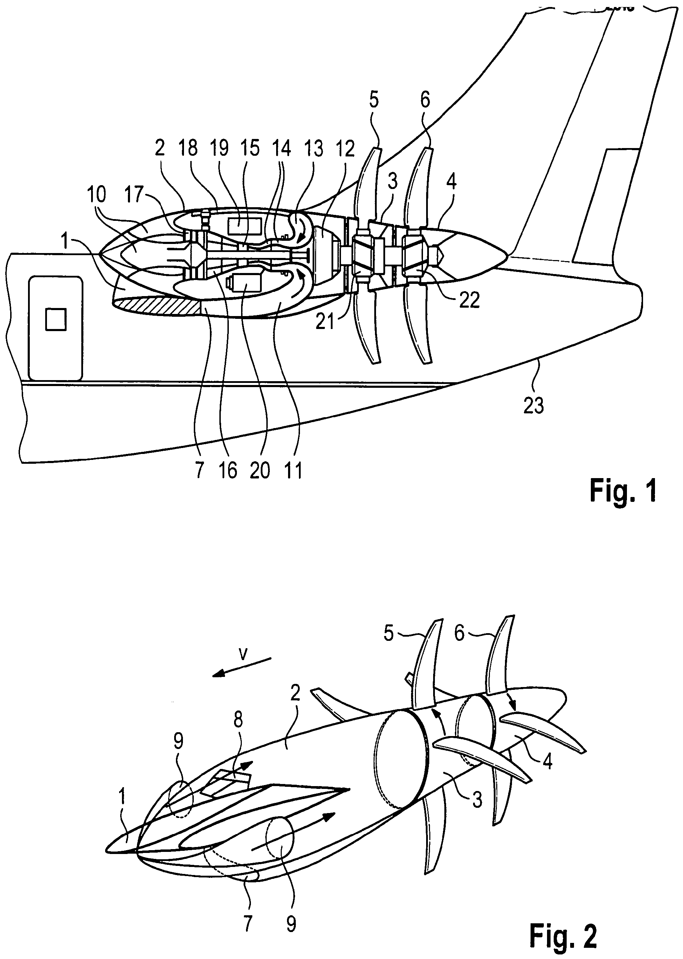

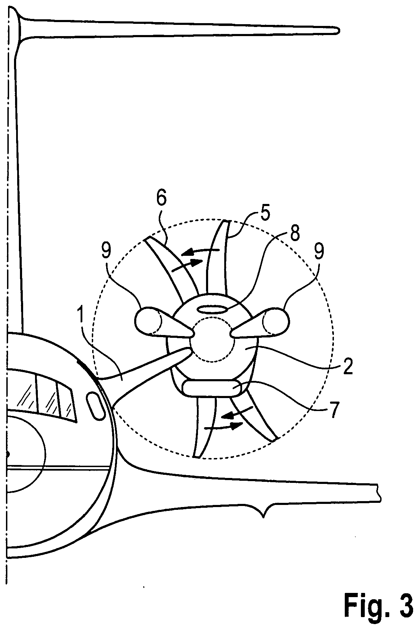

Die Fig. 1 zeigt den hinteren Bereich (Heck) eines Rumpfes 23 eines Flugzeugs. Wie in Fig. 3 gezeigt, ist mittels eines Pylons 1 eine Triebwerksgondel 2 an dem Rumpf 23 befestigt. Die Triebwerksgondel umhüllt in üblicher Weise eine Turbomaschine, welche eine Fluggasturbine umfasst.

An der Triebwerksgondel sind zwei Druckpropeller vorgesehen, nämlich ein vorderer Propeller 5 und ein hinterer Propeller 6. Die Fig. 1 zeigt eine Verkleidung 3 der vorderen Propellernabe und eine Verkleidung 4 der hinteren Propellernabe. Die Druckpropeller 5 und 6 entsprechen dem Stand der Technik, so dass auf eine detaillierte Beschreibung an dieser Stelle verzichtet werden kann, sie umfassen eine vordere Propellernabe 21 sowie eine hintere Propellernabe 22.

Die beiden Druckpropeller 5, 6 werden von einer Turbinenwelle mittels eines Propelleruntersetzungsgetriebes 12 angetrieben, welches in Strömungsrichtung vor den Druckpropellern 5, 6 angeordnet ist.

Erfindungsgemäß ist die Fluggasturbine so installiert, dass ein Verdichtereinlassgehäuse 13 in Flugrichtung vor dem Propelleruntersetzungsgetriebe 12 angeordnet ist. In dieses strömt Luft aus einem Triebwerkseinlass 7 über einen Einlasskanal 11 (Einlassströmungskanal) ein. Wie die Fig. 1 zeigt, wird die einströmende Luft um im Wesentlichen 180° umgelenkt, bevor sie in einen Verdichter 14 gelangt.

Gegen die Flugrichtung strömt die Luft vom Verdichter 14 in eine Brennkammer 15 und nachfolgend in eine Turbine 16 eines Gasgenerators. Das Bezugszeichen 17 bezeichnet eine Arbeitsturbine, welche nachfolgend durchströmt wird. Das Abgas gelangt dann in ein Umkehrabgasgehäuse 10 (Abgasströmungskanal), in welchem die Abgase um ca. 180° umgeleitet werden, so dass sie nach hinten, in Richtung auf die Propeller 5, 6 abgeführt werden können. Das Bezugszeichen 9 zeigt Düsen mit Verkleidung des Umkehrabgasgehäuses 10.

Die einströmende Luft gelangt somit zunächst in den hinteren, den Propellern 5, 6 benachbarten Bereich, durchströmt dann die Fluggasturbine entgegen der Flugrichtung nach vorne und wird am Austritt wiederum nach hinten umgeleitet.

Die Fig. 1 zeigt weiterhin ein Gestänge 18 der Triebwerksaufhängung sowie einen Luft-Ölkühler 19 mit einem in Fig. 3 gezeigten Einlass 8. Das Bezugszeichen 20 bezeichnet ein Antriebsgehäuse von Turbomaschinen-Aggregaten.

Die Fig. 3 zeigt eine stirnseitige Ansicht, aus welcher sich die Drehrichtung der gegenläufigen Propellerblätter ergibt. Weiterhin ist aus Fig. 3 zu sehen, dass der Einlass 8 zum Ölkühler sowie der Triebwerkseinlass 7 und die Düsen 9 in Umfangsrichtung versetzt sind, so dass sich keine Beeinträchtigung der Strömung ergibt.

Die Fig. 2 zeigt in schematischer Darstellung in perspektivischer Ansicht die Aufhängung der Triebwerksgondel 2 mittels des Pylons 1 sowie die bereits im Zusammenhang mit Fig. 3 beschriebenen Einlässe 7, 8 und Düsen 9.

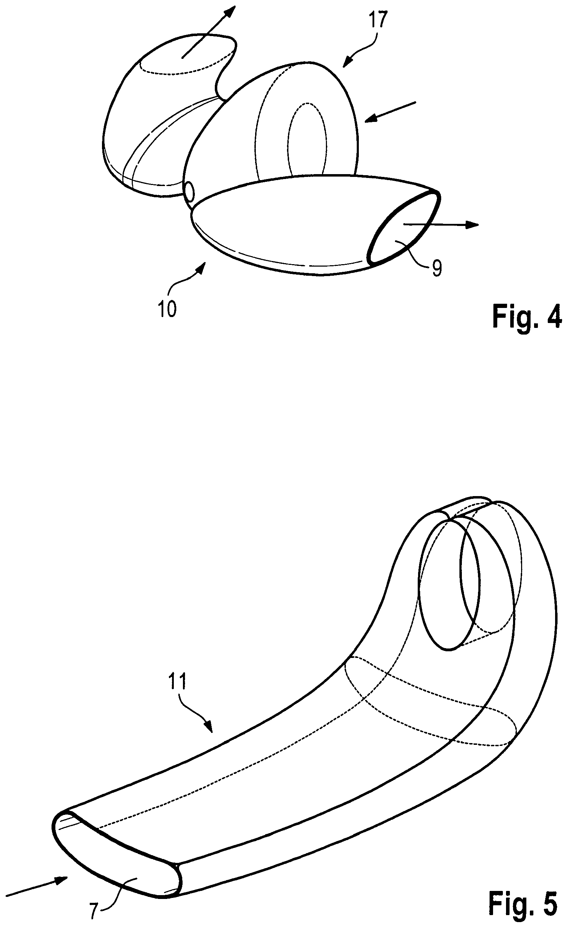

Die Fig. 4 und 5 zeigen jeweils perspektivische, vereinfachte Darstellungen eines Umkehrabgasgehäuses/Abgasströmungskanals 10 (Fig. 4) und eines Einlasskanals/Einlassströmungskanals 11 (Fig. 5).

Die Fig. 4 zeigt dabei die Einströmung von einer nicht dargestellten Arbeitsturbine 17 und die Umlenkung und Aufteilung des Abgases, um dieses zwei seitlichen Düsen 9 zuzuführen. Der Einlass der Abgase ist ringförmig ausgebildet. Durch eine Strömungsoptimierung ergibt sich mittels der Düsen 9 eine Restschuberzeugung.

Die Fig. 5 zeigt einen Luft-Einlasskanal (Einlassströmungskanal) 11, welcher mit einem stetigen Diffusorübergang der Luft von dem Triebwerkeinlass 7 zum ringförmigen Radialeinlass am Verdichtereinlassgehäuse 13 (siehe Fig. 1) ausgebildet ist.

Es ergibt sich somit, dass der erfindungsgemäße Turbopropantrieb durch den Pylon 1 den Schub und alle Triebwerkslasten zum Rumpf 23 am Heck des Flugzeugs überträgt. Stromab der Gondel 2 arbeiten die Propeller 5, 6 entsprechend der Druckpropellerheckinstallation freihängend.

Es versteht sich, dass erfindungsgemäß sowohl die Einlässe 7, 8 als auch die Düsen 9 variiert werden können, beispielsweise zu einem Ringkanal oder in mehrfacher Ausgestaltung. Dabei ist erfindungsgemäß wichtig, dass die umgekehrte Installation der Turbomaschine im Zusammenhang mit den Umleitungen der Luftströmung und der Abgasströmung vorgesehen ist.

### Bezugszeichenliste

- 1: Pylon
- 2: Triebwerksgondel
- 3: Verkleidung der vorderen Propellernabe
- 4: Verkleidung der hinteren Propellernabe
- 5: vorderer Propeller / Druckpropeller
- 6: hinterer Propeller / Druckpropeller
- 7: Triebwerkseinlass
- 8: Einlass zum Luft-Ölkühler
- 9: Düsen mit Verkleidung des Umkehrabgasgehäuses / Turbinenauslassbereich
- 10: Umkehrabgasgehäuse / Abgasströmungskanal
- 11: Einlasskanal / Einlassströmungskanal
- 12: Propelleruntersetzungsgetriebe
- 13: Verdichtereinlassgehäuse
- 14: Verdichter
- 15: Brennkammer
- 16: Turbine des Gasgenerators
- 17: Arbeitsturbine
- 18: Gestänge der Triebwerksaufhängung
- 19: Luft-Ölkühler (mit Lufteinlass 8)
- 20: Antriebsgehäuse der TM-Aggregate
- 21: vordere Propellernabe
- 22: hintere Propellernabe
- 23: Rumpf

## Patentansprüche

1. Turbopropantrieb mit zumindest einem von einer Fluggasturbine angetriebenen Druckpropeller (5, 6), wobei die Fluggasturbine in Flugrichtung vor dem Druckpropeller (5, 6) angeordnet ist und zumindest einen Verdichter (14) und eine Turbine (16, 17) umfasst, wobei die Turbine (17) den Druckpropeller (5, 6) antreibt, **dadurch gekennzeichnet, dass** die Fluggasturbine derart angeordnet ist, dass ein Turbinenauslassbereich (10) in Flugrichtung vorne liegend angeordnet ist und dass die heißen Abgase aus derselben Turbine (17), bezogen auf die Flugrichtung, vorne aus dem Turbopropantrieb austreten und wobei der Verdichter (14) angrenzend an den Druckpropeller (5, 6) angeordnet ist.

2. Turbopropantrieb nach Anspruch 1, **dadurch gekennzeichnet, dass** eine Turbinenwelle in Richtung zum Druckpropeller (5, 6) verlängert ausgebildet und mit einem den Druckpropeller (5, 6) antreibenden Getriebe (12) verbunden ist.

3. Turbopropantrieb nach Anspruch 1 oder 2, **gekennzeichnet durch** zumindest einen anströmende Luft zum Verdichter (14) umlenkenden Einlassströmungskanal (11), welcher in den Einströmbereich des Verdichters (14) mündet.

4. Turbopropantrieb nach einem der Ansprüche 1 bis 3, **gekennzeichnet durch** zumindest einen den Abgasstrom in Richtung des Druckpropellers (5, 6) umleitenden Abgasströmungskanal (10).

5. Turbopropantrieb nach Anspruch 4, **dadurch gekennzeichnet, dass** der Abgasströmungskanal (10) an einem in Flugrichtung gesehen vorderen Bereich des Turbopropantriebs mündet und die Abgase zu Düsen (9) umlenkt.

6. Turbopropantrieb nach Ansprüchen 3 und 4, oder Ansprüchen 3, 4 und 5, **dadurch gekennzeichnet, dass** der Einlassströmungskanal (11) und der Abgasströmungskanal (10) in Umfangsrichtung des Turbopropantriebs versetzt angeordnet sind.

7. Turbopropantrieb nach einem der Ansprüche 3 bis 5, **dadurch gekennzeichnet, dass** mehrere Einlassströmungskanäle (11) und/oder mehrere Auslassströmungskanäle (10) vorgesehen sind.

8. Turbopropantrieb nach einem der Ansprüche 1 bis 7, **dadurch gekennzeichnet, dass** zwei gegenläufige Druckpropeller (5, 6) vorgesehen sind.

## Claims

1. Turboprop engine with at least one pusher propeller (5, 6) driven by an aircraft gas-turbine, with the aircraft gas-turbine being arranged in front of the pusher propeller (5, 6) in the direction of flight and including at least one compressor (14) and a turbine (16, 17), with the turbine (17) driving the pusher propeller (5, 6), **characterized in that** the aircraft gas turbine is arranged such that a turbine outlet area (10) is disposed at the front in the direction of flight and that the hot exhaust gases issue from said turbine (17) in a forward area of the turboprop engine, as viewed in the direction of flight, and with the compressor (14) being arranged adjacent to the pusher propeller (5, 6).

2. Turboprop engine in accordance with Claim 1, **characterized in that** a turbine shaft is designed extended in the direction of the pusher propeller (5, 6) and is connected to a gear (12) driving the pusher propeller (5, 6).

3. Turboprop engine in accordance with Claim 1 or 2, **characterized by** at least one inlet flow duct (11) diverting the inflowing air to the compressor (14) and issuing in the inflow area of the compressor (14).

4. Turboprop engine in accordance with one of the Claims 1 to 3, **characterized by** at least one exhaust gas flow duct (10) diverting the exhaust gas flow in the direction of the pusher propeller (5, 6).

5. Turboprop engine in accordance with Claim 4, **characterized in that** the exhaust gas flow duct (10) issues in a forward area of the turboprop engine, as viewed in the direction of flight, and diverts the exhaust gases to the nozzles (9).

6. Turboprop engine in accordance with Claims 3 and 4, or Claims 3, 4 and 5, **characterized in that** the inlet flow duct (11) and the exhaust gas flow duct (10) are arranged offset in the circumferential direction of the turboprop engine.

7. Turboprop engine in accordance with one of the Claims 3 to 5, **characterized in that** several inlet flow ducts (11) and/ or several exhaust gas flow ducts (10) have been provided.

8. Turboprop engine in accordance with one of the Claims 1 to 7, **characterized in that** two counter-rotating pusher propellers (5, 6) have been provided.

## Revendications

1. Turbopropulseur avec au moins une hélice propulsive (5, 6) entraînée par une turbine à gaz aéronautique, sachant que la turbine à gaz aéronautique est disposée devant l'hélice propulsive (5, 6) dans le sens du vol et comprend au moins un compresseur (14) et une turbine (16, 17), sachant que la turbine (17) entraîne l'hélice propulsive (5, 6), **caractérisé en ce que** la turbine à gaz aéronautique est disposée de telle sorte qu'une zone d'échappement de la turbine (10) est disposée à l'avant dans le sens du vol et que les gaz d'échappement chauds sortent de ladite turbine (17) à l'avant du turbopropulseur, par rapport au sens du vol, et sachant que le compresseur (14) est disposé au voisinage de l'hélice propulsive (5, 6).

2. Turbopropulseur selon la revendication n° 1, **caractérisé en ce qu'**un arbre de turbine se prolonge en direction de l'hélice propulsive (5, 6) et est relié à une transmission (12) entraînant l'hélice propulsive (5, 6).

3. Turbopropulseur selon la revendication n° 1 ou n° 2, **caractérisé par** au moins un canal d'admission (11) déviant l'air entrant vers le compresseur (14), lequel canal d'admission débouche dans la zone d'afflux du compresseur (14).

4. Turbopropulseur selon une des revendications n° 1 à n° 3, **caractérisé par** au moins un canal d'écoulement pour gaz d'échappement (10) déviant le flux des gaz d'échappement en direction de l'hélice propulsive (5, 6).

5. Turbopropulseur selon la revendication n° 4, **caractérisé en ce que** le canal d'écoulement pour gaz d'échappement (10) débouche dans une zone située à l'avant du turbopropulseur par rapport au sens du vol et dévie les gaz d'échappement vers des tuyères (9).

6. Turbopropulseur selon les revendications n° 3 et n° 4, ou les revendications n° 3, 4 et n° 5, **caractérisé en ce que** le canal d'admission (11) et le canal d'écoulement pour gaz d'échappement (10) sont disposés décalés l'un par rapport à l'autre dans le sens circonférentiel du turbopropulseur.

7. Turbopropulseur selon une des revendications n° 3 à n° 5, **caractérisé en ce que** sont prévus plusieurs canaux d'admission (11) et/ ou plusieurs canaux d'écoulement pour gaz d'échappement (10).

8. Turbopropulseur selon une des revendications n° 1 à n° 7, **caractérisé en ce que** deux hélices propulsives (5, 6) contrarotatives sont prévues.
